# EUROPÄISCHE PATENTSCHRIFT

(11) **EP 1 974 601 B1**
(45) Veröffentlichungstag und Bekanntmachung des Hinweises auf die Patenterteilung: **23.03.2011**
(21) Anmeldenummer: 08005932.2
(22) Anmeldetag: 28.03.2008
(51) Int. Cl.: A01F 15/08

(54) **Großballenpresse**
Large baling press
Presse de formage en grands balles

(30) Priorität: 31.03.2007 DE 102007015649
(43) Veröffentlichungstag der Anmeldung: 01.10.2008
(73) Patentinhaber: Maschinenfabrik Bernard Krone GmbH, 48480 Spelle (DE)
(72) Erfinder: Krone, Bernard, Dr.-Ing E.h., 48480 Spelle (DE); Horstmann, Josef, Dr.-Ing., 49479 Ibbenbüren (DE); Martensen, Klaus, Dr.-Ing., 48477 Hörstel (DE); Richter, Maik, Dipl.-Ing., 49479 Ibbenbüren (DE)

(56) Entgegenhaltungen:
- EP-A- 0 819 374
- DE-A1- 19 621 391

## Beschreibung

Die Erfindung betrifft eine Großballenpresse zur Herstellung quaderförmiger Hochdruckballen, insbesondere landwirtschaftliche Erntegutballen, gemäß dem Oberbegriff des Anspruchs 1. Derartige Großballenpressen sind in verschiedenen Ausführungsformen, Größen und Antriebsvarianten bekannt. Am Markt durchgesetzt haben sich bisher jedoch fast ausschließlich die an ein Zugfahrzeug anhängbaren und von diesem mechanisch antreibbaren Pressen.

Die Anforderungen an Großballenpressen haben sich jedoch stetig verändert und insbesondere in jüngster Zeit, in der Stroh als Rohstoff bzw. Energieträger immer mehr zur Handelsware wird und oft über große Entfernungen transportiert werden muss, ergeben sich unter anderem daraus besondere Forderungen. Um die Bergung und den Transport der Großballen möglichst wirtschaftlich durchführen zu können, ist ein für den LKW Transport optimales maximales Ballenmaß und eine möglichst hohe Pressdichte der Quaderballen gefordert. Nur so können die Transporteinheiten nicht nur vom Volumen, sondern auch von der Nutzlast voll ausgenutzt werden. Das Handling derartig großer und schwerer Ballen stellt durch den mittlerweile üblichen Einsatz professioneller Bergetechnik, wie beispielsweise Radlader oder Teleskoplader keine Grenzen dar.

Bei der Herstellung derartig hochverdichteter und großformatiger Ballen hingegen, stößt man bezüglich notwendiger Antriebsleistungen und herrschenden Kräften innerhalb der Großballenpressen in bisher nicht erreichte Dimensionen vor. Zur optimalen Auslastung der Pressen werden Antriebsleistungen ab 140 KW aufwärts empfohlen, wobei die vom Hauptgetriebe zu übertragende Spitzenleistung im Pressbetrieb auf ein Mehrfaches ansteigen kann. Um diese Leistungsspitzen überhaupt bereitstellen zu können und um einen gleichmäßigen ruhigen Lauf der Presse zu gewährleisten, ist es seit langem Stand der Technik, in den Antriebsstrang von landwirtschaftlichen Kolbenpressen eine Schwungmasse in der Form eines Schwungrades zu integrieren. Zur Absicherung des Schlepperantriebs ist es dabei üblich, in den Antriebsstrang vor dem Schwungrad eine Überlasteinrichtung, insbesondere eine Reibkupplung einzubauen.

Bei den zuvor erwähnten Höchstdruckpressen sind insbesondere das Schwungrad und das Hauptgetriebe derart grösser und schwerer dimensioniert, dass für das Anlaufen der Maschinen nachteilig ein wesentlich erhöhtes Antriebsmoment notwendig ist. Aufgrund der hohen Massenträgheit des Gesamtantriebes der Pressen ist ein Startvorgang mit Schleppern geringerer Leistungsklassen, die jedoch für den Betrieb der Pressen ausreichend wären, sehr problematisch.

Es sind Antriebslösungen für Großballenpressen bekannt, bei denen ein oder mehrere dem Schwungrad nachgeordnete Komponentenantriebe schaltbar ausgeführt sind. So können diese Komponenten nach dem Anlauf der Presse zugeschaltet werden, um so den Anlauf zu erleichtern. Eine derart ausgestattete Großballenpresse ist unter anderem aus dem Prospekt - QUADRANT 3400 - der Fa. CLAAS KGaA mbH mit dem Druckvermerk 08/06 (DC) deutsch 10/000 246 479.0 bekannt. Bei der dort beschriebenen Presse ist beispielsweise der zuschaltbare Rotorantrieb durch ein Powerband ausgeführt. Des Weiteren ist die Pickup hydraulisch angetrieben und damit ebenfalls nachträglich einschaltbar.

Nachteilig sind all diese Lösungen jedoch mit einem zusätzlichen hohen konstruktiven und steuerungstechnischen Aufwand und damit auch Kosten verbunden. Außerdem verursachen sie nach dem erfolgten Startvorgang im Pressbetrieb eine Verschlechterung des Antriebswirkungsgrades und damit erhöhte Betriebskosten.

Aus der EP 0 819 374 A1 ist ein Antriebssystem für eine Großballenpresse bekannt geworden, bei der in dem von der Schlepperzapfwelle zum Schwungrad führenden Antriebsstrang ein Vorschaltgetriebe angeordnet ist, welches in der Ausführungsform eines Planetengetriebes ausgebildet ist. Eine Eingangswelle des Planetengetriebes nimmt das Antriebsmoment von der Zapfwelle ab und ist mit dem Steg der Planetenräder antriebsverbunden. Ein Hohlrad, welches drehbar auf der Eingangswelle gelagert ist, weist eine Innenverzahnung auf, die mit der Verzahnung der Planetenräder ineinander kämmt. Durch das Abrollen der Planetenräder in dem Hohlrad wird eine Antriebsdrehbewegung auf ein mit der Abtriebswelle verbundenes Sonnenrad übertragen, wenn das Hohlrad entweder festgesetzt ist oder eine definierte Antriebsdrehbewegung erfährt. Zu diesem Zweck weist das Hohlrad auch eine Außenverzahnung auf, auf die eine Antriebsquelle einwirkt. Wollte man bei einer solchen Antriebsanordnung eine Antriebsdrehbewegung der Abtriebswelle durch die auf die Außenverzahnung des Hohlrades einwirkende Antriebsquelle erzeugen, so müsste dazu die Antriebswelle des Planetengetriebes festgesetzt werden. Ein derartiges Festsetzen der Zapfwelle ist bauartgemäß bei landwirtschaftlichen Traktoren nicht üblich.

Durch die DE 196 21 391 A1 ist eine Ballenpresse für landwirtschaftliches Erntegut offenbart, bei der ein dem Schwungrad nachgeordneter, das Hauptgetriebe der Ballenpresse bildender Getriebeblock als Planeten-Summengetriebe ausgeführt ist. Auch hierbei ist ein zweiter Antrieb vorgesehen, der auf das Hohlrad des Planetengetriebes einwirkt, um veränderliche Drehzahlen der Hauptantriebswelle des Presskolbens zu ermöglichen. Auch bei dieser Ausführungsform treten die gleichen Nachteile auf, die schon bei der Großballenpresse nach der EP 0 819 374 A1 angeführt worden sind.

Es ist Aufgabe der vorliegenden Erfindung, das Antriebssystem für eine landwirtschaftliche Großballenpresse derart zu verbessern, dass die vorbeschriebenen Nachteile ganz oder teilweise vermieden werden.

Diese Aufgabe wird erfindungsgemäß durch die Merkmale des Anspruchs 1 gelöst. In den weiteren Ansprüchen schließen sich vorteilhafte Weiterbildungen der Erfindung an.

Gemäß der Erfindung wird eine Großballenpresse zur Herstellung quaderförmiger Hochdruckballen bereitgestellt, welche als selbstfahrende oder als an eine Zugmaschine angehängte und angetriebene Erntemaschine das Erntegut mittels einer Aufnahme- und Fördereinrichtung aufnimmt und einem Presskanal zuführt, in dem ein alternierend angetriebener Presskolben das Erntegut verdichtend zu einem Ballen formt, mit einer Schwungmasse im Antriebsstrang eines Hauptantriebes der Großballenpresse, die im Pressbetrieb unterstützend auf den Antrieb einwirkt, wobei neben dem Hauptantrieb eine Anlaufeinrichtung mit einem von dem Hauptantrieb unabhängigen, auf den Antriebsstrang wirkenden Nebenantrieb vorgesehen ist, durch den die Großballenpresse unabhängig vom Hauptantrieb antreibbar ist, wobei in einer ersten Phase des Startvorganges der Großballenpresse der Nebenantrieb der Anlaufeinrichtung als alleiniger Antrieb oder als den Hauptantrieb unterstützender Antrieb der Großballenpresse wirkt und dass während des Startvorganges der Hauptantrieb mittels einer Freilaufeinrichtung den Nebenantrieb beschleunigend überholt, worauf der Nebenantrieb auf den weiteren Startvorgang keinen Einfluss mehr ausübt.

Insbesondere zur Schonung des Zapfwellenantriebs von Schleppern mit geringerer Antriebsleistung wird bei einer vorteilhaften Ausführungsform der Anlaufeinrichtung der Startvorgang bis zu einer vorgebbaren Grenzdrehzahl alleinig durch den Nebenantrieb der Anlaufeinrichtung der Großballenpresse durchgeführt. Bei Erreichen der Grenzdrehzahl, die auch gleichzeitig die Höchstdrehzahl der Anlaufeinrichtung sein kann, wird der Zapfwellenantrieb des Schleppers als Hauptantrieb zugeschaltet, der dann wesentlich müheloser die bereits in Drehung versetzten Massen weiter beschleunigen kann. Um eine möglichst kurze Anlaufzeit der Presse zu erreichen, sollte das Schwungrad bzw. der gesamte Pressenantrieb auf eine möglichst geringe, aber optimale Drehzahl vorbeschleunigt werden, so dass die Schlepperzapfwelle ohne Anlaufprobleme die weitere Beschleunigung und Drehmomentübertragung übernehmen kann. Durch eine Freilaufeinrichtung wird dabei die Anlaufeinrichtung wirkungslos und vor Zerstörung durch den überholenden Hauptantrieb geschützt. In diversen Testreihen mit unterschiedlichen Schleppern verschiedener Leistungsklassen wurden als optimale Vorbeschleunigungsdrehzahl Werte zwischen 250 und 300 Umdrehungen pro Minute ermittelt.

Besonders vorteilhaft kann nach der Anlaufphase, wenn der Hauptantrieb die weitere Beschleunigung übernimmt, der Nebenantrieb der Anlaufeinrichtung abgeschaltet werden und hat somit keinerlei negativen Einfluss auf den Pressbetrieb. Er verbraucht weder weitere Energie noch beeinflusst er den Wirkungsgrad des Gesamtantriebs.

Die Steuerung des Startvorgangs ist in einer besonders einfachen und kostengünstigen Ausführung durch manuelle Schaltung durch den Fahrer des Schleppers bzw. der selbstfahrenden Großballenpresse denkbar. In einer komfortabeln Ausführung lässt sich der Startvorgang aber auch automatisiert durch eine Steuerung durchführen, wobei die Drehzahlen und entsprechenden Schaltpunkte zur Anpassung auch programmierbar sein könnten.

Um auch insbesondere die große Massenträgheit des Schwungrades durch die Anlaufeinrichtung zu erfassen, ist die Anordnung der Anlaufeinrichtung im Antriebsstrang vor dem Schwungrad besonders vorteilhaft. Bei einer Ausführung der Großballenpresse als schleppergezogene Maschine bietet sich eine Teilung der Hauptantriebswelle vom Zapfwellenanschluss des Schleppers zum Schwungrad durch den Einbau der Anlaufeinrichtung in der Form eines Getriebes an. In bevorzugter Ausgestaltung ist dabei der Hauptantrieb direkt durch das Getriebe hindurchgeleitet, ohne dabei durch eine Getriebestufe im Wirkungsgrad negativ beeinflusst zu werden. Ein an diesem Getriebe vorteilhaft direkt angeflanschter Hydraulikmotor als Nebenantrieb könnte so über eine Stirnradverbindung direkt auf den Hauptantrieb einwirken, wobei ein Pneumatik oder Elektromotor auch denkbar, aber weniger vorteilhaft währen.

Diverse weitere Ausführungsmöglichkeiten einer Anlaufeinrichtung, wie beispielsweise durch einen Reibradantrieb, eventuell direkt am Schwungrad angreifend, durch einen Riemenantrieb, welcher durch Spannen und Entspannen geschaltet wird oder aber auch durch Zwischenschaltung eines Wandlers sind denkbar, aber keine der Möglichkeiten löst derart vorteilhaft die Aufgabe der Erfindung wie die zuvor beschriebene. Sie ist mit geringem konstruktiven Aufwand und kostengünstig realisierbar. Sie nutzt durch den hydraulischen Antrieb vorhandene Möglichkeiten der Energiebereitstellung. Sie ist eventuell sogar in bestehende Pressen nachträglich integrierbar. Sie bietet im Service- und Reparaturfall die Möglichkeit die Presse mit einer niedrigen Drehzahl auch schlepperunabhängig laufen zu lassen. Außerdem kann die Anlaufeinrichtung auch sehr vorteilhaft als Reversiereinrichtung genutzt werden wenn gleichzeitig die Freiläufe im Antriebsstrang gesperrt werden.

All diese vorteilhaften Merkmale der erfindungsgemäßen Großballenpresse beziehen sich nicht nur auf von einer Zugmaschine gezogene und angetriebene Ausführungen, sondern ebenso auf selbstfahrende Großballenpressen.

Weitere Vorteile und Einzelheiten der Erfindung ergeben sich aus den Unteransprüchen und einem in der Zeichnung dargestellten Ausführungsbeispiel, das im folgenden beschrieben wird.

In der Zeichnung zeigt:
**Fig. 1****:** eine Seitenansicht einer erfindungsgemäßen Großballenpresse zur Herstellung quaderförmiger Hochdruckballen in schematisierter Darstellung;
**Fig. 2**: eine perspektivische Teilansicht der Anlaufeinrichtung der Presse nach Fig. 1

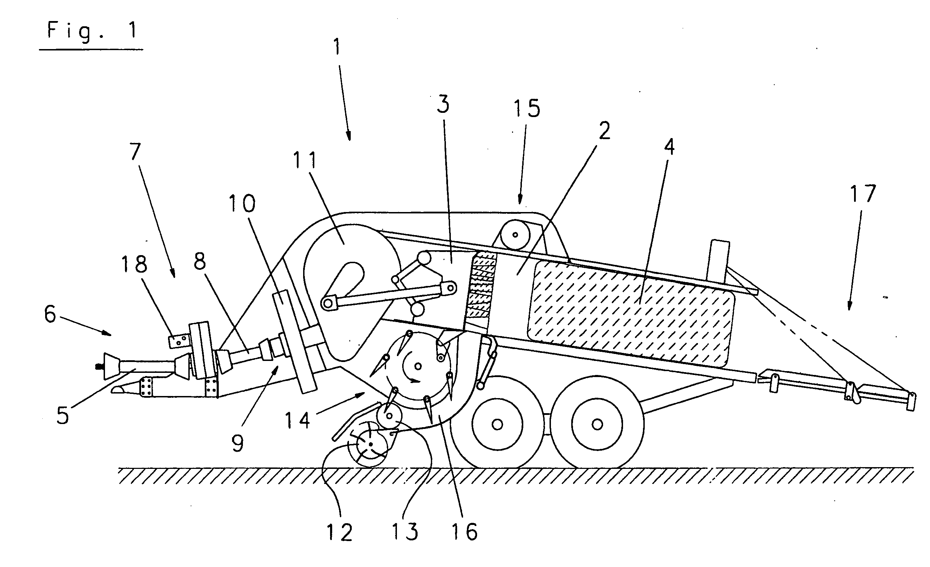

In Fig.1 ist eine landwirtschaftliche Großballenpresse 1 zu sehen, die eine Ballenpresskammer in der Form eines Presskanals 2 mit einem darin hin- und herbeweglichen Presskolben 3 zur Herstellung quaderförmiger Großballen 4 aufweist. Die gezeigte Presse 1 ist schematisiert dargestellt und teils von Verkleidungen und verdeckenden Bauteilen freigemacht, um erfindungsrelevante Einzelheiten sichtbar zu machen. Der Antrieb der Presse 1, welche im gezeigten Ausführungsbeispiel als an eine Zugmaschine anhängbare und von dieser antreibbaren Ausführung gezeigt ist, erfolgt mittels einer Gelenkwelle 5. Der Hauptantrieb der Presse 1 erfolgt über den Antriebsstrang 6 bestehend aus, erster Gelenkwelle 5, Anlaufeinrichtung 7, zweiter Gelenkwelle 8, Sicherheitskupplungen 9 und Schwungrad 10, zum Hauptgetriebe 11. Vom Hauptgetriebe 11 werden der Presskolben 3 sowie die Nebenaggregate wie die Aufnahme- und

Fördereinrichtung (Pickup) 12, Schneidrotor 13, Raffer- und Förderaggregat 14, die Knotereinrichtung 15, sowie eine nicht dargestellte Hydraulikpumpe für die bordeigene Versorgung angetrieben.

Durch die Pickup 12 wird das vorwiegend in Schwaden auf dem Boden liegende Erntegut aufgenommen und über den Schneidrotor 13 durch den Förderkanal 16 mit Unterstützung des Raffer- und Förderaggregats 14 weitergeleitet. Am Ende des Förderkanals 16 wird das Erntegut gesammelt und vorgepresst. Ausgelöst durch das Erreichen von Sollwerten bezüglich Füllmenge und Druck im Förderkanal 16 wird dieser freigegeben und das Erntegutpaket durch eine entsprechende Ansteuerung des Raffer- und Förderaggregats 14 in den Presskanal 2 gefördert. Dort werden die Erntegutpakete vom Presskolben 3 weiter verdichtet und zu einem Erntegutballen 4 geformt, der bei Erreichen einer vorbestimmten Länge von der Knotereinrichtung 15 für einen dauerhaften Zusammenhalt mit Bindegarn umwickelt und verknotet wird. Durch den nachfolgenden, neu entstehenden Ballen wird der fertige Ballen 4 nach und nach aus dem Presskanal 2 geschoben und rutscht abschließend über die Schurre 17 auf das Feld. Durch das große, schwere Schwungrad 10 im Antriebsstrang 6 wird bei der Nenndrehzahl von 1000 min⁻¹ ein hohes Drehmoment bereitgestellt, welches im Pressbetrieb für die Lastspitzen notwendig ist. Die Sicherheitskupplungen 9 im Antriebsstrang 6 sind voreinstellbare Überlastkupplungen, welche den Schlepper und die Maschine insbesondere im Störungsfall vor Schäden durch das große Schwungmoment des Schwungrades 10 schützen sollen.

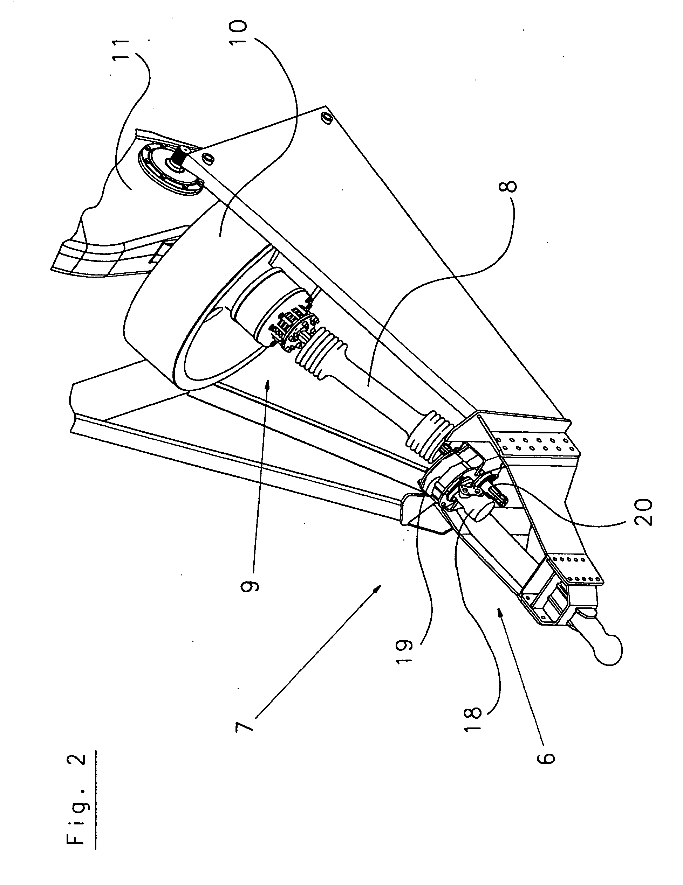

Die in Fig. 2 deutlich dargestellte Anlaufeinrichtung 7 im Antriebsstrang 6 des Ausführungsbeispiels einer erfindungsgemäßen Großballenpresse 1 umfasst einen Nebenantrieb 18, der in diesem Fall als Hydraulikmotor ausgeführt ist. Der Nebenantrieb 18 ist direkt an das Getriebegehäuse 19 der Anlaufeinrichtung 7 angeflanscht und mit einem Stirnrad verbunden, welches mit einem auf der durchgehenden Getriebewelle 20 der Anlaufeinrichtung 7 angeordneten Stirnrad im Eingriff steht. Durch eine Überholkupplung, beispielsweise in Form eines Klemmrollenfreilaufs zwischen der Getriebewelle 20 und dem darauf angeordnetem Stirnrad wird der Nebenantrieb 7 geschützt, wenn der Antriebsstrang 6 vom Schlepper die Anlaufeinrichtung 7 überholend angetrieben wird. Die Anlaufeinrichtung 7 dient dazu, den Startvorgang der Großballenpresse 1 zu unterstützen. Das kann entweder durch alleiniges Anlaufen der Presse, angetrieben durch den Nebenantrieb 18 der Anlaufeinrichtung 7 erfolgen, oder unterstützend zum Hauptantriebs durch den Schlepper.

In verschiedenen Versuchsreihen hat sich jedoch ein alleiniger Anlauf der Presse durch die Anlaufeinrichtung 7 bis zu einer Grenzdrehzahl, die je nach Belastungszustand der Presse 1 zwischen 200 min⁻¹ und 300 min⁻¹ liegt, als besonders vorteilhaft herausgestellt. Ab dieser Drehzahl wird dann der Zapfwellenantrieb des Schleppers eingeschaltet, der dann mühelos die vorbeschleunigten Schwungmassen weiter hoch beschleunigen kann, wobei die Maximaldrehzahl der Anlaufeinrichtung 7, ermöglicht durch die Freilaufeinrichtung, überholt wird und somit keine Wirkung mehr auf den Antriebsstrang 6 ausübt. Der Nebenantrieb 18 der Anlaufeinrichtung 7 kann daraufhin abgeschaltet werden.

Die vorteilhafte Ausführung der Anlaufeinrichtung 7 der erfindungsgemäßen Großballenpresse 1 durch ein Zahnradgetriebe, zeichnet sich insbesondere durch eine kompakte Bauweise und einen hohen Wirkungsgrad bei der Übertragung hoher Drehmomente aus. Andere Ausführungslösungen, beispielsweise mit einem Reibradantrieb, währen alleine von den notwendigen Abmessungen her kaum realisierbar. Die Ausbildung des Nebenantriebs 18 als Hydromotor hat unter anderem den Vorteil, dass die Antriebsenergie ohne zusätzlichen Aufwand von jedem Schlepper bereitgestellt wird, außerdem liefert er bei kompakten Abmessungen ein besonders hohes Anlaufmoment. Für einen Elektroantrieb ist die Stromversorgung eines Schleppers nicht ausreichend.

Die Steuerung der Anlaufeinrichtung 7 und damit des Ablaufes des Startvorgangs der Großballenpresse 1 ist je nach Komfortwunsch in verschiedenen Varianten denkbar. So lassen sich im einfachsten Fall, eventuell bei einer Nachrüstung alle Funktionen direkt manuell vom Maschinenbediener schalten, wobei aktuelle Umstände und Belastungszustände jedoch auch sofort berücksichtigt werden können. Als Komfortlösung ist eine Integration der Funktionen in die Maschinensteuerung mit programmierbaren Schaltdrehzahlen und Schaltzeiten und voll automatisiertem Ablauf auch realisierbar.

So ist es durch die Erfindung gelungen, mit relativ einfachen Mitteln und in kompakter Bauweise das Antriebssystem einer Großballenpresse derart zu verbessern, das die einleitend beschriebenen Nachteile des Standes der Technik vermieden sind.

## Patentansprüche

1. Großballenpresse (1) zur Herstellung quaderförmiger Hochdruckballen, insbesondere landwirtschaftliche Erntegutballen, welche als selbstfahrende oder als an eine Zugmaschine angehängte und angetriebene Erntemaschine das Erntegut mittels einer Aufnahme- und Fördereinrichtung (12) aufnimmt und einem Presskanal (2) zuführt, in dem ein alternierend angetriebener Presskolben (3) das Erntegut verdichtend zu einem Ballen (4) formt, mit einer Schwungmasse (10) im Antriebsstrang (6) eines Hauptantriebes der Großballenpresse (1), die im Pressbetrieb unterstützend auf den Antrieb einwirkt, **dadurch gekennzeichnet, dass** neben dem Hauptantrieb eine Anlaufeinrichtung (7) mit einem von dem Hauptantrieb unabhängigen, auf den Antriebsstrang (6) wirkenden Nebenantrieb (18) vorgesehen ist, durch den die Großballenpresse unabhängig vom Hauptantrieb antreibbar ist, wobei in einer ersten Phase des Startvorganges der Großballenpresse der Nebenantrieb (18) der Anlaufeinrichtung (7) als alleiniger Antrieb oder als den Hauptantrieb unterstützender Antrieb der Großballenpresse (1) wirkt und dass während des Startvorganges der Hauptantrieb mittels einer Freilaufeinrichtung den Nebenantrieb (18) beschleunigend überholt, worauf der Nebenantrieb (18) auf den weiteren Startvorgang keinen Einfluss mehr ausübt.

2. Großballenpresse (1) zur Herstellung quaderförmiger Hochdruckballen nach Anspruch 1, **dadurch gekennzeichnet, dass** der Nebenantrieb (18) der Anlaufeinrichtung (7) beim Startvorgang zumindest Teile der Großballenpresse (1) in Bewegung versetzt.

3. Großballenpresse (1) zur Herstellung quaderförmiger Hochdruckballen nach Anspruch 1, **dadurch gekennzeichnet, dass** der Nebenantrieb (18) der Anlaufeinrichtung (7) zumindest beim Startvorgang der Großballenpresse (1) mit der Schwungmasse (10) antriebsverbunden ist.

4. Großballenpresse (1) zur Herstellung quaderförmiger Hochdruckballen nach Anspruch 1, **dadurch gekennzeichnet, dass** in einer zweiten Phase des Startvorgangs der Nebenantrieb (18) der Anlaufeinrichtung (7) die Großballenpresse (1) zusammen mit einem Hauptantrieb antreibt.

5. Großballenpresse (1) zur Herstellung quaderförmiger Hochdruckballen nach Anspruch 1, **dadurch gekennzeichnet, dass** in einer dritten Phase des Startvorgangs der Hauptantrieb die Großballenpresse (1) alleinig antreibt.

6. Großballenpresse (1) zur Herstellung quaderförmiger Hochdruckballen nach Anspruch 5, **dadurch gekennzeichnet, dass** der Nebenantrieb (18) der Anlaufeinrichtung (7) nach einer Anlaufphase, wenn der Hauptantrieb die weitere Beschleunigung übernimmt, abschaltbar ist.

7. Großballenpresse (1) zur Herstellung quaderförmiger Hochdruckballen nach einem der vorhergehenden Ansprüche, **dadurch gekennzeichnet, dass** die Anlaufeinrichtung (7) mit hydraulischer, pneumatischer, elektrischer oder kinetischer Energie antreibbar ist.

8. Großballenpresse (1) zur Herstellung quaderförmiger Hochdruckballen nach einem der vorhergehenden Ansprüche, **dadurch gekennzeichnet, dass** die Großballenpresse (1) durch die Anlaufeinrichtung (7) reversierbar antreibbar ist.

9. Großballenpresse (1) zur Herstellung quaderförmiger Hochdruckballen nach einem der vorhergehenden Ansprüche, **dadurch gekennzeichnet, dass** die Anlaufeinrichtung (7) den Antrieb der Großballenpresse (1) auf maximal 50% der Nenndrehzahl vorbeschleunigt.

10. Großballenpresse (1) zur Herstellung quaderförmiger Hochdruckballen nach einem der vorhergehenden Ansprüche, **dadurch gekennzeichnet, dass** der Kraftfluss des Hauptantriebs der Großballenpresse (1) zumindest bis zum Schwungrad (10) keine Getriebestufe durchläuft.

## Claims

1. Large-bale baling press (1) for producing cuboid high-compression bales, and in particular bales of harvested agricultural crops, which, in the form of a self-propelled harvesting machine or one hitched to and driven from a prime mover, picks up the harvested crop by means of a pick-up and feeding arrangement (12) and feeds it to a pressing passage (2) in which a pressing ram (3) which is driven in reciprocation shapes the harvested crop into a bale (4) by compression, having a gyrating mass (10) in the drive train (6) of a main drive of the large-bale baling press (1) which, in pressing operation, acts on the drive in an assisting capacity, **characterised in that**, as well as the main drive, there is also provided a starting arrangement (7) which has a subsidiary drive (18) which acts on the drive train (6) and by which the large-bale baling press can be driven independently of the main drive, the auxiliary drive (18) of the starting arrangement (7) acting as the sole drive of the large-bale baling press (1), or as a drive which assists the main drive, in a first phase of the process of starting the large-bale baling press, and **in that**, during the starting process, the main drive accelerates to a higher speed than the auxiliary drive (18) by means of a freewheel arrangement, whereupon the auxiliary drive (18) ceases to have any effect on the remainder of the starting process.

2. Large-bale baling press (1) for producing cuboid high-compression bales according to claim 1, **characterised in that** the auxiliary drive (18) of the starting arrangement (7) sets at least parts of the large-bale baling press (1) in motion in the starting process.

3. Large-bale baling press (1) for producing cuboid high-compression bales according to claim 1, **characterised in that** the auxiliary drive (18) of the starting arrangement (7) is drivingly connected to the gyrating mass (10) at least in the process of starting the large-bale baling press (1).

4. Large-bale baling press (1) for producing cuboid high-compression bales according to claim 1, **characterised in that** the auxiliary drive (18) of the starting arrangement (7) drives the large-bale baling press (1) together with a main drive in a second phase of the starting process.

5. Large-bale baling press (1) for producing cuboid high-compression bales according to claim 1, **characterised in that** the main drive alone drives the large-bale baling press (1) in a third phase of the starting process.

6. Large-bale baling press (1) for producing cuboid high-compression bales according to claim 5, **characterised in that** the auxiliary drive (18) of the starting arrangement (7) can be switched off after a start-up phase, when the main drive takes over responsibility for further acceleration.

7. Large-bale baling press (1) for producing cuboid high-compression bales according to one of the foregoing claims, **characterised in that** the starting arrangement (7) can be driven by hydraulic, pneumatic, electrical or kinetic energy.

8. Large-bale baling press (1) for producing cuboid high-compression bales according to one of the foregoing claims, **characterised in that** the large-bale baling press (1) can be driven reversibly by the starting arrangement (7).

9. Large-bale baling press (1) for producing cuboid high-compression bales according to one of the foregoing claims, **characterised in that** the starting arrangement (7) pre-accelerates the drive of the large-bale baling press (1) to a maximum of 50% of its rated speed.

10. Large-bale baling press (1) for producing cuboid high-compression bales according to one of the foregoing claims, **characterised in that** the transmission of force from the main drive of the large-bale baling press (1) does not pass through a gearing stage at least until the gyrating mass (10) is reached.

## Revendications

1. Presse à balles (1) de grandes dimensions pour produire des balles parallélépipédiques fortement comprimées, notamment des balles de produits agricoles de récolte, presse réalisée sous la forme d'une machine automotrice ou d'une machine de récolte entraînée et accrochée à une machine de traction, pour prendre le produit de récolte par une installation de réception et de transfert (12) et alimenter un canal de presse (2) dans lequel un piston de presse (3) entraîné suivant un mouvement alterné, comprime le produit de récolte pour former une balle (4),
une masse d'inertie (10) équipant la ligne d'entraînement (6) de l'entraînement principal de la presse (1), et agissant sur l'entraînement pour soutenir le fonctionnement de la pression,
presse **caractérisée en ce qu'**
à côté de l'entraînement principal, elle comporte une installation de démarrage (7) avec un entraînement auxiliaire (18) fonctionnant indépendamment de l'entraînement principal pour agir sur la ligne d'entraînement (6) et entraîner la presse à balles de grandes dimensions indépendamment de l'entraînement principal,
- et dans une première phase de l'opération de démarrage de la presse à balles de grandes dimensions, l'entraînement auxiliaire (18) fonctionne comme entraînement unique ou comme entraînement assistant l'entraînement principal de la presse à balles de grandes dimensions (1), et
- au cours de l'opération de démarrage, l'entraînement principal dépasse l'entraînement auxiliaire (18) par l'intermédiaire d'une installation à roue libre, si bien que l'entraînement auxiliaire (18) n'exerce plus aucune influence sur la suite de l'opération de démarrage.

2. Presse à balles de grandes dimensions (1) pour produire des presses parallélépipédiques fortement comprimées selon la revendication 1,
**caractérisée en ce qu'**
au démarrage, l'entraînement auxiliaire (18) de l'installation de démarrage (7) met en mouvement au moins des parties de la presse à balles de grandes dimensions (1).

3. Presse à balles de grandes dimensions (1) pour produire des presses parallélépipédiques fortement comprimées selon la revendication 1,
**caractérisée en ce qu'**
au moins pendant l'opération de démarrage de la presse à balles de grandes dimensions (1), l'entraînement auxiliaire (18) de l'installation de démarrage (7) est relié dans le sens de l'entraînement à la masse d'inertie (10).

4. Presse à balles de grandes dimensions (1) pour produire des presses parallélépipédiques fortement comprimées selon la revendication 1,
**caractérisée en ce que**
dans une seconde phase de l'opération de démarrage, l'entraînement auxiliaire (18) de l'installation de démarrage (7) entraîne la presse à balles de grandes dimensions (1) en combinaison avec un entraînement principal.

5. Presse à balles de grandes dimensions (1) pour produire des presses parallélépipédiques fortement comprimées selon la revendication 1,
**caractérisée en ce que**
dans une troisième phase de l'opération de démarrage, l'entraînement principal entraîne seul la presse à balles de grandes dimensions (1).

6. Presse à balles de grandes dimensions (1) pour produire des presses parallélépipédiques fortement comprimées selon la revendication 5,
**caractérisée en ce qu'**
après une phase de démarrage, l'entraînement auxiliaire (18) de l'installation de démarrage (7) est coupé lorsque l'entraînement principal assure la poursuite de l'accélération.

7. Presse à balles de grandes dimensions (1) pour produire des presses parallélépipédiques fortement comprimées selon l'une des revendications précédentes,
**caractérisée en ce que**
l'installation de démarrage (7) est entraînée par de l'énergie hydraulique, pneumatique, électrique ou cinétique.

8. Presse à balles de grandes dimensions (1) pour produire des presses parallélépipédiques fortement comprimées selon l'une des revendications précédentes,
**caractérisée en ce que**
la presse à balles de grandes dimensions (1) est entraînée de manière réversible par l'installation de démarrage (7).

9. Presse à balles de grandes dimensions (1) pour produire des presses parallélépipédiques fortement comprimées selon l'une des revendications précédentes,
**caractérisée en ce que**
l'entraînement de la presse à balles de grandes dimensions (1) est préaccéléré au maximum à 50 % de la vitesse de rotation nominale par l'installation de démarrage (7).

10. Presse à balles de grandes dimensions (1) pour produire des presses parallélépipédiques fortement comprimées selon l'une des revendications précédentes,
**caractérisée en ce que**
la ligne de transmission des efforts de l'entraînement principal de la presse à balles de grandes dimensions (1) ne traverse pas d'étage de transmission au moins jusqu'au volant d'inertie (10).
